# EUROPEAN PATENT SPECIFICATION

(11) **EP 2 202 151 B1**
(45) Date of publication and mention of the grant of the patent: **14.09.2016**
(21) Application number: 09176205.4
(22) Date of filing: 17.11.2009
(51) Int. Cl.: B64D 15/14

(54) **Aircraft with an ice protection system**
Flugzeug mit einem Eisschutzsystem
Aéronef avec un système de protection contre le givre

(30) Priority: 17.11.2008 US 115264 P
(43) Date of publication of application: 30.06.2010
(73) Proprietor: Goodrich Corporation, Charlotte, NC 28217-4578 (US)
(72) Inventor: Botura, Galdemir C., North Canton, OH 44720 (US)
(74) Representative: Taylor, Adam David

(56) References cited:
- US-A1- 2006 196 994
- US-A1- 2007 176 049
- US-A1- 2008 218 385

## Description

Ice can accrete on exposed or otherwise susceptible surfaces of an aircraft when it encounters supercooled liquid. When ice accretes on airfoil surfaces, such as wings and stabilizers, shape modifications occur which typically increase drag and decrease lift. And ice accretion on engine inlet lips can disrupt desired flow patterns and/or contribute to ice ingestion. To avoid performance problems during flight, an ice protection system must be able to shield an aircraft from the most extreme icing conditions.

US 2006/196994 A1 describes an ice protection system for an aircraft, where the inputs to the system are the air temperature and the power condition of the aircraft.

### SUMMARY

The invention provides an aircraft with an ice protection system as defined in claim 1. The ice protectors can be independently controllable by the controller and, depending upon channel-input information, they can operate in either an anti-icing mode or a deicing mode. In this manner, ice protection can be accomplished effectively and efficiently for specific flight circumstances, instead of rigidly expending power that would be required to remedy the most extreme ice impingement conditions.

### DRAWINGS

Figure 1 is a perspective view of an aircraft having several surfaces protectable by the ice protection system.
Figure 2 is a schematic diagram of one of the aircraft's surface and the ice-susceptible regions thereon.
Figure 3 is a schematic diagram of the ice protection system, with ice protectors associated with one of the aircraft's surfaces.
Figure 4 is a schematic diagram of the ice protection system, with ice protectors associated with several of the aircraft's ice-susceptible regions.

### DESCRIPTION

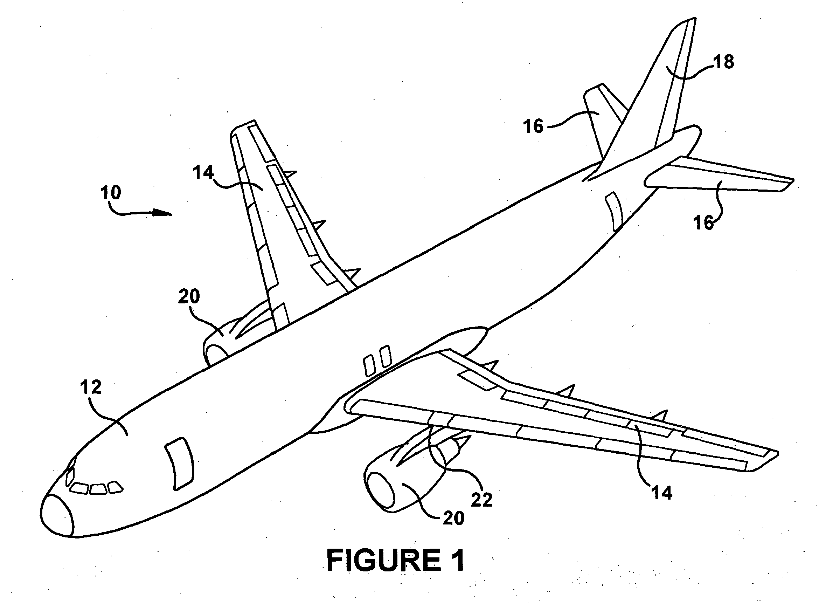

An aircraft 10, such as that shown in Figure 1, can comprise fuselage 12, wings 14, horizontal stabilizers 16, a vertical stabilizer 18, engines 20, and pylons 22. The wings 14 are the aircraft's primary lift providers. The horizontal stabilizers 16 prevent up-down motion of the aircraft nose, and the vertical stabilizer 18 discourages side to side swinging. The engines 20 are the aircraft's thrust-providing means and the pylons 22 serve as underwing mounting means for the engines.

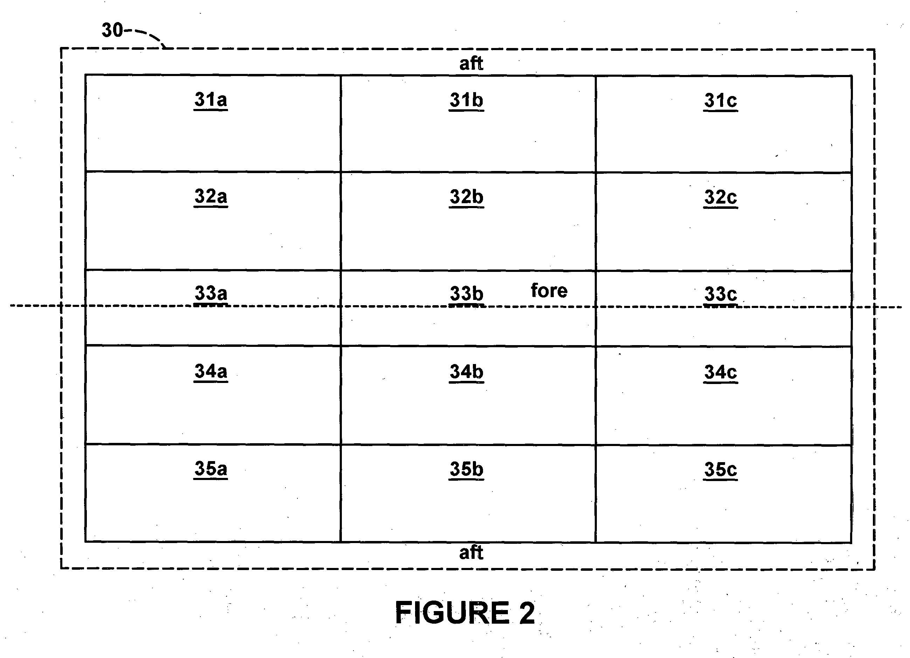

As shown in Figure 2, each wing 14, stabilizer 16/18, engine 20, and/or pylon 22 has a surface 30 that can be viewed as having a plurality of consecutive ice-susceptible regions 31-35. As is explained in more detail below, the regions 31-35 are simply a conceptual mapping tool and they are determined by the placement of ice protection components (protectors 51-55 introduced below). The aircraft surface 30 does not need, and probably will not have, any structural features defining regional perimeters or boundaries.

In the illustrated embodiment, the regions are arranged in three rows (a, b, c) and each row has five consecutive regions (31, 32, 33, 34, 35).. Regions are characterized as consecutive if they precede one after the other in a substantially fore-aft direction. Thus, depicted regions 31a - 35a could be considered consecutive regions, depicted regions 31b - 35 b could be considered consecutive regions, and depicted regions 31c - 35c could be considered consecutive regions.

Depending upon the aircraft 10 and the particular aircraft component, more or less rows, and/or more or less regions-per-row may be more appropriate. With the vertical stabilizer 18 and/or the pylon 22, for example, a single row of consecutive regions and as few as two regions may be sufficient. And the congregation of regions in regular (or irregular) rows is certainly not required. In the same regard, the aircraft surface 30 need not be segmented into rectangular or similarly shaped regions as shown; the regions 31-35 can comprise a collection of sectors of varying sizes and/or geometries.

While the regions appear in a flat array in the drawing, this is simply for ease in illustration and explanation. In most instances, the regions will form a curved profile wrapping around the associated aircraft structure. Specifically, for example, the region 31 will form one end of the curve, the region 35 will form an opposite end of the curve, and the regions 31-34 will extend therebetween.

If the surface area 30 is on one of the wings 14, the regions 33 could be curved about the wing's leading edge, the regions 31-32 could be upper regions, and the regions 34-35 could be lower regions. The rows could extend spanwise across the wing 14. An analogous arrangement could be used if the surface area 30 is on one of the horizontal stabilizers 16.

If the surface area 30 is on the vertical stabilizer 18, the regions 33 could likewise curve around the leading edge. The remaining regions 31 - 32 could be rightside regions and the remaining regions 34-35 could be leftside regions. The regions 31-33 could be likewise located if the surface area 30 is on one of the pylons 22.

If the surface area 30 is on one of the engines 20, the regions 33 could be wrapped about the nacelle inlet lip and the rows (a, b, c) could extend radially therearound. With such a circular profile, the regions 31-32 could be outer regions and the regions 34-35 could be inner regions.

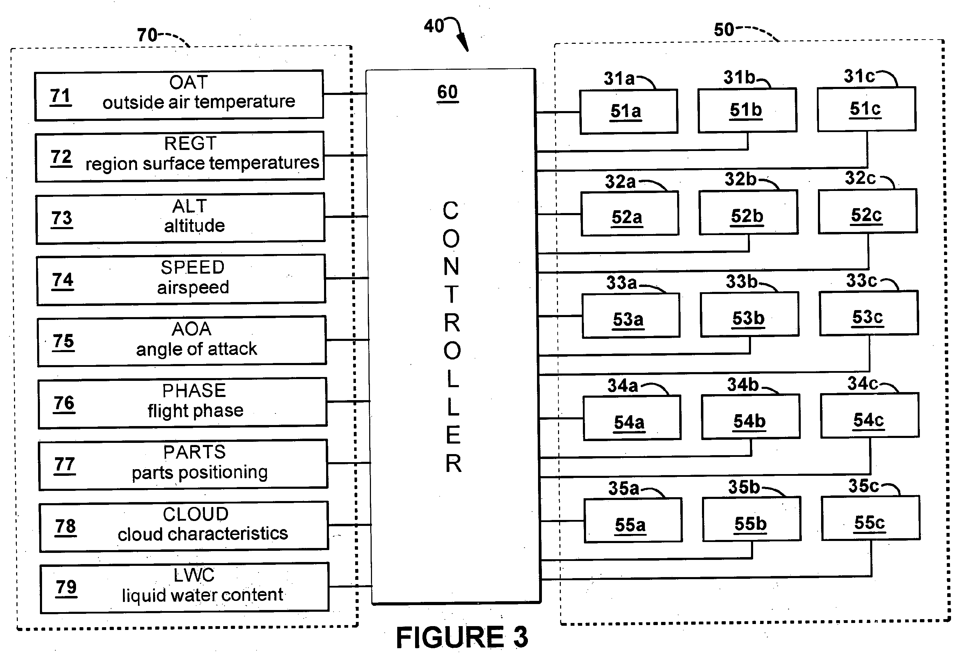

Referring now to Figure 3, the aircraft ice protection system 40 is schematically shown. The system 40 comprises an ice-protector grid 50 associated with the relevant aircraft surface 30 and the grid 50 comprises an ice protector 51-55 for each ice-susceptible region 31-35. Thus, with the illustrated regions 31-35, the ice protectors are arranged in three rows (a, b, c) and each row has five consecutive ice protectors (51-55). The ice protectors 51-55 can each comprise an electrothermal heater that converts electrical energy into heat energy.

The ice protection system 40 also comprises a controller 60 that controls the supply of electrical energy to the ice-protector grid 50. At least some of the ice protectors 51-55 are independently controllable by the controller 60. An independently-controlled ice protector has its own supply path of electrical energy and this supply can be adjusted by the controller 60 autonomously of the other protectors.

At least some of the independently-controlled ice protectors 51-55 are multi-mode ice protectors. Each multi-mode ice protector can be selectively operated in one of an anti-icing mode, a deicing mode, and an inactive mode. In the anti-icing mode, electrical energy is continuously supplied to ice protector 51-55 for an extended period of time (*e.g.,* greater than 10 seconds) to prevent ice from forming on the corresponding region 31-35. In the deicing mode, electrical energy is intermittently supplied (*e.g.,* for distinct periods of time separated by at least 10 seconds) to the ice protector 51-55 to episodically remove ice form on the corresponding region. And in the inactive mode, electrical energy is not supplied (and is not scheduled to be supplied) to the ice protector 51-55 for an extended period (*e.g.,* more than 120 seconds).

All of the ice protectors 51-55 in the grid 50 are capable of multi-mode operation as this may afford the most embracing portfolio of operational patterns and/or facilitate modular manufacturing and inventory. In many instances, however, certain ice protectors need only operate in one of an anti-icing mode and a deicing mode, regardless of climate conditions and/or flight circumstances. For example, on a wing 14 or stabilizer 16/18, the fore-most protectors 33 could be dedicated anti-icing components and/or the aft-most ice protectors 31/35 could be dedicated deicing components.

The controller 60 can further be adapted to provide one, some or all of the ice protectors 51-55 with a range of power draws (*e.g.,* 100%, 50%, 75%, 25% etc.). These different power draws can be accomplished by direct voltage reduction, if possible and practical. Additionally or alternatively, a range of non-zero power draws can be created by an incessant series of on-off modulation increments (*e.g.,* 150 millisecond increments) summing into a resultant anti-ice or deice time period.

The ice protection system 40 further comprises an input-channel constellation 70 comprising a plurality of input channels 71-79. The channels sense, measure, detect, receive, or otherwise obtain information during flight and convey this data to the controller 60. The controller 60 then controls the supply of electrical energy to the ice protectors 51-55 based on this information.

An input channel (e.g., channel 71) can correspond to outside air temperature (OAT). As a general rule (keeping in mind that real life frequently disagrees with general rules), ice will not form during flight unless the temperature reaches the freezing threshold. This temperature input can be used, for example, in the determination of whether icing conditions are present and, if so, the severity of such conditions.

An input channel (e.g., channel 72) can correspond to region specific temperatures (RST) of the relevant aircraft surface 30. When supercooled drops contact an aircraft surface 30 that is below 0°C, they will freeze. With large supercooled drops, the freezing process is relatively gradual (due to the release of latent heat) resulting in runback and an increased likelihood of clear ice formation. Tiny supercooled drops, on the other hand, will freeze on contact, into easily removable rime ice. Troublesome clear ice formation usually occurs at below freezing. While rime ice is most commonly encountered with OATs in the -10°C to -20°C range.

The input channels 71 and 72 can together convey information to the controller 60 that can help ascertain the chance of clear ice formation. If these channels 71/72 collectively signal a high chance of clear ice creation (e.g., an OAT hovering near 0°C and a RST below 0°C), the controller 60 can aggressively supply electrical energy to runback-risk regions (e.g., aft regions 31 and 35) to curtail such formation. If the channels 71/72 instead suggest the strong possibility of rime ice (e.g., an OAT below -10°C and a RST below 0°C), less assertive measures can be adopted.

Additionally or alternatively, the input channel 72 can relay temperature information regarding areas outside the ice-protected regions 31-35. If non-ice-protected regions of the aircraft surface 30 (e.g., non-heated) are below freezing, runback solidification can be concern. If this challenge presents itself, the controller 60 can strategically deprive the aft-most regions 31 and 35 of heat so as to, for example, build temporary dams to block water flow beyond the protected regions.

An input channel (e.g., channel 73) can be devoted to data about aircraft altitude (ALT). Icing is rare above 2500 meters because any clouds at this altitude generally contain already-frozen water droplets. If the channel 73 indicates an acceptably high altitude, and no other information signifies icing apprehension, the controller 60 can relax the ice protectors into inactive modes. If the channel 73 indicates a lower altitude, this indication in combination with other data (*e.g.,* OAT readings) can be used to tailor optimum ice protection operation.

An input channel (*e.g.,* channel 74) can be related to aircraft speed (SPEED). A general rule is (again, remembering that general rules often have exceptions), that the swifter the speed, the warmer the relevant surface 30, and the less chance of icing incidences. While speed will usually not alone dictate appropriate ice-protection parameters, it may be a helpful ingredient in the overall analysis. Additionally or alternatively, speed inputs can also alert the controller 60 to sudden changes in aircraft travel, and may be a determinative factor in choosing between two otherwise adequate options.

An input channel (*e.g.,* channel 75) can correspond to the angle of attack (AOA) at this particular point of flight. The angle of attack typically changes significantly during aircraft climb/descent. And in any event, a variance in the angle of attack almost always causes a migration of airfoils stagnation lines.

While anti-icing is persistently viewed as obligatory at a stagnation line, deicing is usually deemed suitable at locations immediately adjacent (*i.e.,* fore) thereto. If multi-mode ice protectors 52-54 reside on non-aft regions 32-34, the controller's knowledge of the stance of the stagnation line allows anti-icing (*e.g.,* very power intensive) to be confined to this location and deicing (*e.g.,* less power consuming) to be employed at adjacent locations. This energy-saving advantage can be further enhanced by the regions 33 and ice protectors 53 replaced with several thin regions/protectors. A strip-like (rather than patch-like) geometry can permit fine-tuned programming of mode selection to closely follow the stagnation shift.

An angle of attack can additionally or alternatively influence the relative ice accumulation on the different regions of an aircraft surface 30. A greater angle of attack, for example, can often cause less ice on upper aft regions and more ice on lower aft regions. The controller 60 can use the conveyed AOA data in the formulation of the best (and probably non-symmetrical) operation of the upper/lower ice protectors.

An input channel (e.g., channel 76) can correspond to the flight phase of the aircraft 10. Ice issues generally introduce themselves with the greatest incidence during non-cruise flight phases (e.g., takeoff, climb, and approach). This is because, in part, there is a greater probability of encountering liquid water at the lower altitudes traveled during these phases.

And regardless of altitude (and even with cloudless skies and temperatures above freezing) icing concerns may lurk within engines 20 during taxiing and takeoff. During pre-cruise flight phases, reduced pressure exists within the engine intakes, which can lower temperatures to such a degree that condensation and/or sublimation takes place. If the input channel 76 indicates that aircraft 10 is in the taxiing phase or the takeoff phase, and the channel 71 indicates an OAT less than 10 C, the controller 60 can initiate preventive measures. It may be noted that, during other flight phases, a temperature of 9°C would not trigger any increased awareness.

The flight phase of the aircraft 10 can also be used to reprioritize the deicing hierarchy. The horizontal stabilizers 16, for example, normally take a back seat to the main wings while in the cruise phase. But these components can become increasingly important during the approach/landing phase of a flight (due to increased pitch control demand). Enter into the equation that the horizontal stabilizers 16 can collect proportionally two to three times more ice than wings (due to the relatively small leading edge radius and the wing-dwarfed chord length); the flight phase becomes quite significant. The controller 60 can be programmed to notch up ice protection on the horizontal stabilizers 16 if the channel 76 conveys that the aircraft 10 is an approach/landing phase.

An input channel (e.g., channel 77) can be used to provide the controller 60 with information regarding the position of movable parts of the aircraft 10. These movable parts typically comprise control surfaces hinged or otherwise movably attached to fixed aircraft components such as the wings 14 and/or the stabilizers 16/18. The wings 14 can have, for example, ailerons for roll, flaps or slats for lift enhancement, and/or spoilers for lift reduction. The horizontal stabilizers 16 can have elevators for up-down deflection and the vertical stabilizer 18 can have a rudder for left-right deflection.

The positioning of movable parts during can heighten the importance of ice protection on certain aircraft surfaces 30. For example, if wing flaps are deployed to improve lift coefficient, such deployment will also intensify nose-down pitching moment and thereby amplify the download duty of the horizontal stabilizers 16. With the input channel 77, the controller 60 can be notified of part movement and adjust ice-protection parameters accordingly.

An input channel (*e.g.,* channel 78) can be used to convey cloud characteristics to the controller 60 as the aircraft 10 encounters such cast members. This information could be obtained, for example, by meteorological satellites and screened for alignment with the aircraft's global position. As icing depends largely upon cloud structures, such data would certainly be beneficial in the controller's creation of the most advantageous ice-protection strategy.

Cumulus clouds (*i.e.,* clouds have heaping cauliflower-like appearances) present the greatest icing concerns worries at OATs between 0° C and -20 °C, with less cause for concern at OATs between -20° C and-40° C. At OATs less than -40° C, icing fears essentially vanish with cumulus clouds. With a stratiform cloud (*i.e*., a cloud having a vertically thin layer-like appearance), the most aggressive ice protection steps are necessary at OATs between 0° C to -15° C, less aggressive steps are necessary at OATs between -15° C to -30° C, and at less than. Thus, an OAT at -35° C corresponds to either a medium (cumulus) or low (stratiform) alert level depending upon cloud structure.

Cloud structure aside, freezing rain and drizzle should be cautiously heeded when the OAT is at or below 0° C. Clear ice is most likely to form in freezing rain, a phenomena comprising raindrops that spread out and freeze on contact with a cold aircraft structure. As clear ice has a tenuous personality, the controller 60 can be programmed to treat potential clear-ice conditions with the utmost care and cation.

An input channel (*e.g.,* channel 79) (not claimed) can be used to provide information concerning liquid water content in the ensuing airstream. The channel 79 can be fed information by, for example, an instrument sensor mounted on the outside of the aircraft 12. (See *e.g.,* http://ntrs.nasa.gov/archive/nasa/casi.ntrs /.nasa.gov/20090022002 200902156.) A liquid water content up to 0.125 g/m³ could correspond, for example, to trace intensity with barely perceptible ice formations on unheated aircraft surfaces. The controller 60 therefore could be programmed to rest the ice protectors 51-55. A liquid water content of 0.125 g/m³ to 0.25 g/m³ and a liquid water content of 0.25 g/m³ to 0.60 g/m³ could correspond to moderate ice intensities and the controller 60 could be adapted to bolster its attack upon receiving such data. Channel-conveyed LWC data upwards of 0.60 g/m³ could trigger the controller 60 in a watchful stance whereat it monitors icing conditions with escalated diligence.

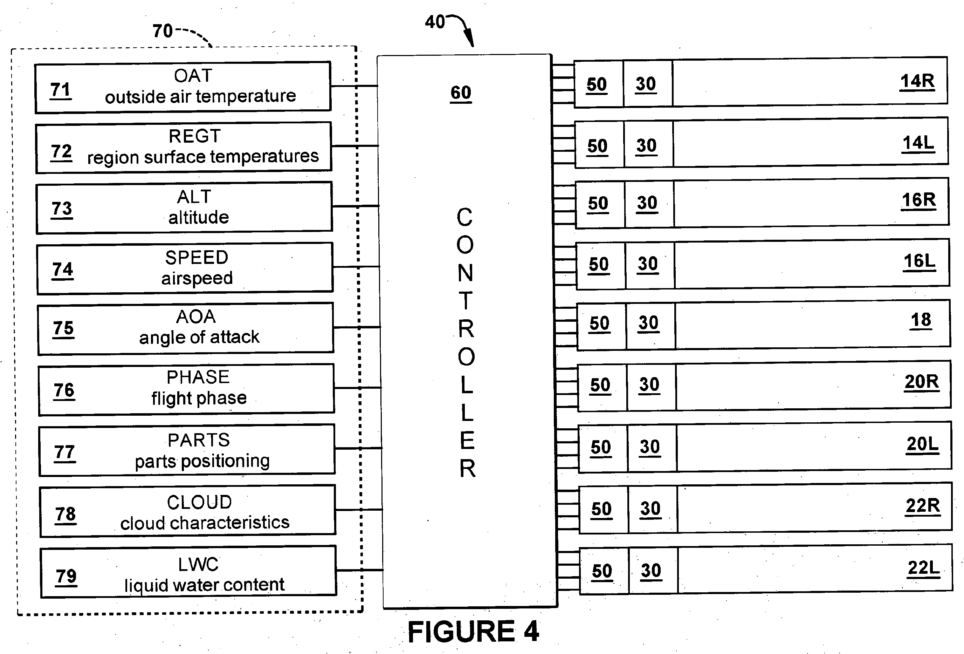

In the ice protection system 40 shown in Figure 3, the ice protectors 51-55 are associated with one aircraft surface 30 and the controller 60 optimizes the ice protection of the regions 31-35 of such surface based on data input through the channel constellation 70. As shown in Figure 4, the ice protectors 51-55 for several of the aircraft surfaces 30 can be controlled by the same controller 60 based on the channel-input data. The latter arrangement may facilitate overall aircraft power optimization, as it allows the controller 60 to take into consideration the aircraft's overall ice protection needs.

One may now appreciate that with the aircraft ice protection system 40, the ice protectors 50 can be operated so as to most effectively and efficiently addresses the flight circumstances, instead of rigidly expending the power required to remedy the most extreme ice impingement conditions.

Although the aircraft 10, the aircraft surface 30, the system 40, the grid 50, the controller 60, and/or the channel constellation 70 have been shown and described with respect to a certain embodiment or embodiments, it is obvious that equivalent alterations and modifications will occur to others skilled in the art upon the reading and understanding of this specification and the annexed drawings. In regard to the various functions performed by the above described elements (*e.g.,* components, assemblies, systems, devices, compositions, etc.), the terms (including a reference to a "means") used to describe such elements are intended to correspond, unless otherwise indicated, to any element which performs the specified function of the described element (*i.e.,* that is functionally equivalent), even though not structurally equivalent to the disclosed structure which performs the function.

## Claims

1. An aircraft with an ice protection system (40), comprising:
an aircraft surface (30) having a plurality of consecutive ice-susceptible regions (31-35);
an ice protector grid (50), comprising a plurality of ice protectors (51-55), each of the plurality of ice protectors arranged with a corresponding one of the ice-susceptible regions (31-35), each of the ice protectors having an anti-icing mode, a deicing mode, and an inactive mode;
a controller (60) that controls a supply of electrical energy to the ice protector grid (50), at least some of the ice protectors (51-55) being independently controllable by the controller (60); and
a plurality of input channels (71-79) connected to the controller (60), supplying electrical energy to the plurality of ice protectors (51-55) based upon information received from the plurality of input channels (71-79),
wherein, in the anti-icing mode, each multi-mode ice protector (51-55) is operated continuously to prevent ice from forming on a corresponding region (31-35); and
wherein, in the deicing mode, each multi-mode ice protector (51 -55) is operated intermittently to remove ice formed on the corresponding region (31- 35); and
wherein, in an inactive mode, each multi-mode ice protector (51-55) is not operated;
**characterised by** the plurality of input channels (71-79) including one or more of a group of non-temperature inputs consisting of: an aircraft altitude input channel (73), an aircraft speed channel (74), an aircraft angle of attack channel (75), a flight phase channel (76), a movable parts positioning channel (77), and a cloud characteristics channel (78).

2. The aircraft as set forth in claim 1, wherein each ice protector has an electrothermal heater which converts electrical energy into heat;
wherein, when an ice protector is in an anti-icing mode, electrical energy is substantially continuously supplied to this multi-mode ice protector to prevent ice from forming on the corresponding region;
wherein, when an ice protector is in a deicing mode, electrical energy is intermittently supplied to the ice protector to remove ice formed on the corresponding region; and
wherein, when an ice protector is in an inactive mode, electrical energy is not supplied to the ice protector.

3. The aircraft as set forth in any of claims 1 to 2, wherein at least one input channel (71, 72) provides temperature data to the controller (60) and at least one input channel (73-79) provides the non-temperature data to the controller (60); and
wherein the controller (60) uses both the temperature data and the non-temperature data to determine an optimum mode of operation for each of the multi-mode ice protectors (51-55).

4. The aircraft as set forth in claim 3, wherein the temperature data corresponds to the outside air temperature (OAT).

## Patentansprüche

1. Flugzeug mit einem Eisschutzsystem (40), umfassend:
eine Flugzeugoberfläche (30) mit einer Vielzahl von aufeinanderfolgenden eisanfälligen Regionen (31-35);
ein Eisschutzgitter (50), umfassend eine Vielzahl von Eisschutzeinrichtungen (51-55), wobei jede der Vielzahl von Eisschutzeinrichtungen mit einer entsprechenden der eisanfälligen Regionen (31-35) angeordnet ist, wobei jede der Eisschutzeinrichtungen einen Anti-Vereisungsmodus, einen Enteisungsmodus und einen inaktiven Modus aufweist;
eine Steuereinrichtung (60), die eine Zufuhr elektrischer Energie an das Eisschutzgitter (50) steuert, wobei wenigstens einige der Eisschutzeinrichtungen (51-55) durch die Steuereinrichtung (60) unabhängig gesteuert werden können; und
eine Vielzahl von Eingangskanälen (71-79), die mit der Steuereinrichtung (60) verbunden ist, die auf Grundlage von Informationen, die von der Vielzahl von Eingangskanälen (71-79) empfangen werden, der Vielzahl von Eisschutzeinrichtungen (51-55) elektrische Energie zuführt,
wobei im Anti-Vereisungsmodus die einzelnen MehrfachmodusEisschutzeinrichtungen (51-55) kontinuierlich betrieben werden, um zu verhindern, dass sich Eis an einer entsprechenden Region (31-35) bildet; und
wobei im Enteisungsmodus die einzelnen Mehrfachmodus-Eisschutzeinrichtungen (51-55) intermittierend betrieben werden, um Eis zu entfernen, das sich an der entsprechenden Region (31-35) gebildet hat; und
wobei in einem inaktiven Modus die einzelnen MehrfachmodusEisschutzeinrichtungen (51-55) nicht betrieben werden;
**dadurch gekennzeichnet, dass** die Vielzahl von Eingangskanälen (71-79) einen oder mehrere einer Gruppe von Nichttemperatureingängen beinhaltet, bestehend aus: einem Flugzeugflughöheneingangskanal (73), einem Flugzeuggeschwindigkeitskanal (74), einem Flugzeuganströmwinkelkanal (75), einem Flugphasenkanal (76), einem Kanal für die Positionierung beweglicher Teile (77) und einem Wolkencharakteristikkanal (78).

2. Flugzeug nach Anspruch 1, wobei jede Eisschutzeinrichtung eine elektrothermische Heizeinrichtung aufweist, die elektrische Energie in Wärme umwandelt;
wobei, wenn sich eine Eisschutzeinrichtung in einem Anti-Vereisungsmodus befindet, dieser Mehrfachmodus-Eisschutzeinrichtung elektrische Energie im Wesentlichen kontinuierlich zugeführt wird, um zu verhindern, dass sich Eis in der entsprechenden Region bildet;
wobei, wenn sich eine Eisschutzeinrichtung in einem Enteisungsmodus befindet, der Eisschutzeinrichtung elektrische Energie intermittierend zugeführt wird, um Eis zu entfernen, das sich in der entsprechenden Region gebildet hat; und
wobei, wenn sich eine Eisschutzeinrichtung in einem inaktiven Modus befindet, der Eisschutzeinrichtung keine elektrische Energie zugeführt wird.

3. Flugzeug nach einem der Ansprüche 1 bis 2, wobei wenigstens ein Eingangskanal (71, 72) Temperaturdaten an die Steuereinrichtung (60) bereitstellt und wenigstens ein Eingangskanal (73-79) Nichttemperaturdaten an die Steuereinrichtung (60) bereitstellt; und
wobei die Steuereinrichtung (60) sowohl die Temperaturdaten als auch die Nichttemperaturdaten verwendet, um einen optimalen Betriebsmodus für eine jede der Mehrfachmodus-Eisschutzeinrichtungen (51-55) zu bestimmen.

4. Flugzeug nach Anspruch 3, wobei die Temperaturdaten der Außenlufttemperatur (OAT) entsprechen.

## Revendications

1. Aéronef doté d'un système de protection contre le givre (40), comprenant :
une surface d'aéronef (30) comportant une pluralité de régions successives sujettes au givre (31 à 35) ;
une grille protectrice contre le givre (50), comprenant une pluralité de protecteurs contre le givre (51 à 55), chacun des protecteurs de la pluralité de protecteurs contre le givre étant disposé avec une des régions sujettes au givre (31 à 35) correspondante, chacun des protecteurs contre le givre présentant un mode antigivre, un mode de dégivrage et un mode inactif ;
un contrôleur (60) qui régule une alimentation d'énergie électrique jusqu'à la grille protectrice contre le givre (50), au moins une partie des protecteurs contre le givre (51 à 55) étant indépendamment contrôlable par le contrôleur (60) ; et
une pluralité de canaux d'entrée (71 à 79) raccordés au contrôleur (60), fournissent de l'énergie électrique à la pluralité de protecteurs contre le givre (51 à 55) en fonction des informations reçues depuis la pluralité de canaux d'entrée (71 à 79),
dans lequel, dans le mode antigivre, chaque protecteur multimodal contre le givre (51 à 55) est activé en continu pour empêcher que le givre ne se forme sur une région correspondante (31 à 35) ; et
dans lequel, dans le mode de dégivrage, chaque protecteur multimodal contre le givre (51 à 55) est activé par intermittence pour éliminer le givre formé sur la région correspondante (31 à 35) ; et
dans lequel, dans un mode inactif, aucun protecteur multimodal contre le givre (51 à 55) n'est activé ;
**caractérisé par** la pluralité de canaux d'entrée (71 à 79) comprenant au moins une entrée d'un groupe d'entrées autre que de température constituée de : un canal d'entrée d'altitude d'aéronef (73), un canal de vitesse d'aéronef (74), un angle d'aéronef de canal d'attaque (75), un canal de phase de vol (76), un canal de positionnement de parties mobiles (77) et un canal de caractéristiques de nuage (78).

2. Aéronef selon la revendication 1, dans lequel chaque protecteur contre le givre compte un dispositif électrothermique de chauffage qui convertit de l'énergie électrique en chaleur ;
dans lequel, quand un protecteur contre le givre est en mode antigivrage, l'énergie électrique est sensiblement fournie en continu à ce protecteur multimodal contre le givre pour empêcher la formation de givre sur la région correspondante ;
quand un protecteur contre le givre est en mode de dégivrage, l'énergie électrique est fournie par intermittence au protecteur contre le givre pour éliminer le givre formé sur la région correspondante ; et
dans lequel, quand un protecteur contre le givre est en mode inactif, aucune énergie électrique n'est fournie au protecteur contre le givre.

3. Aéronef selon l'une quelconque des revendications 1 à 2, dans lequel au moins un canal d'entrée (71, 72) fournit des données de température au contrôleur (60) et au moins un canal d'entrée (73 à 79) fournit des données autres que de température au contrôleur (60) ; et
le contrôleur (60) utilisant à la fois les données de température et les données autres que de température pour déterminer un mode optimal de fonctionnement pour chacun des protecteurs multimodaux contre le givre (51 à 55).

4. Aéronef selon la revendication 3, dans lequel les données de température correspondent à la température de l'air extérieur (OAT).
